# EUROPEAN PATENT APPLICATION

(11) **EP 3 835 046 A1**
(43) Date of publication of application: **16.06.2021**
(21) Application number: 19216078.6
(22) Date of filing: 13.12.2019
(51) Int. Cl.: B29D 35/08, B29C 45/16, B29C 33/00, B29L 31/50, B29C 45/56, B29C 45/28, B29C 67/24, B29C 45/06, B29C 45/07, A43B 13/12, A43B 13/14

(54) **METHOD AND INJECTION MOLDING SYSTEM FOR THE DIRECT SOLING OF A MULTILAYERED SHOE SOLE**

(71) Applicant: DESMA Schuhmaschinen GmbH, 28832 Achim (DE)
(72) Inventor: REMMELE, Uwe, 28213 Bremen (DE)
(74) Representative: Hertin und Partner Rechts- und Patentanwälte PartG mbB

(57) **Abstract**

The invention relates to a method for the direct soling of a multilayered shoe sole. The method is characterized by providing two distinct sets of mold frames for a first and a second shoe sole layer and a distinct order for the soling of the layers. In contrast to prior art approaches a first layer (e.g. a midsole) is first soled to an upper in a first mold frame and subsequently a second layer (e.g. an outer sole) is soled onto said first layer in a second mold frame. The method allows for an increased design flexibility and the inclusion of additional functional or aesthetic features, such as air pockets, undercuts, toe caps or running sole tips previously not possible with direct soling processes. The invention further relates to an injection molding system equipped and configured for carrying out the method.

## Description

The invention relates to a method for the direct soling of a multilayered shoe sole. The method is characterized by providing two distinct sets of mold frames for a first and a second shoe sole layer and a distinct order for the soling of the layers. In contrast to prior art approaches a first layer (e.g. a midsole) is first soled to an upper in a first mold frame and subsequently a second layer (e.g. an outer sole) is soled onto said first layer in a second mold frame. The method allows for an increased design flexibility and the inclusion of additional functional or aesthetic features, such as air pockets, undercuts, toe caps or running sole tips previously not possible with direct soling processes. The invention further relates to an injection molding system equipped and configured for carrying out the method.

### BACKGROUND AND PRIOR ART

Injection molding is a technology commonly used for high-volume manufacturing of items made of thermoplastic or foam material, most commonly thermoplastic polymers. During a typical injection molding process, a molding material is forcefully injected into a mold cavity having a particular cavity shape. The injected molding material is held under pressure in the mold cavity, cooled, and then removed as a solidified part having a shape that essentially duplicates the cavity shape of the mold. Injection molding can preferably be used for the manufacture of shoe soles or parts thereof.

For instance, as described in US Patent 3,915,608, injection molding systems are known in the art suitable for bonding shoe soles to uppers, such systems including a turntable rotatably mounted on a fixed base and supporting a plurality of molds. Each mold includes mold sides and a piston-operated base. In order to produce a shoe, a lasted upper, i.e., a last with a shoe upper mounted thereon, is moved downwardly at a molding station to close a mold cavity formed by the mold sides and mold piston, and a sole is molded successively onto the base of each lasted upper at the molding station. Immediately prior to molding, the lasted upper closes the top of the mold, i.e., the mold cavity is formed and the turntable is rotated so that the mold opposes the dispensing head of a horizontal extruder, which injects a charge of thermoplastic material, e.g. polyvinyl chloride, into the mold under pressure to form the shoe soles.

Shoe soles are no longer considered to be single colored or single property objects formed from synthetic materials. Instead it is desirable to produce shoe soles with various hardness zones or colors, for both technical and aesthetic improvements for the wearer.

DE 10 2015 108 086 describes an injection molding system that allows for the production of multilayered shoe soles. The injection unit comprises a mixing head in which a mixing screw is situated that leads into a nozzle mouthpiece connectable to a sprue. Different base materials and additives can be introduced into the screw chamber and subsequently injected via the nozzle mouthpiece into the cavity. Typical base materials include polyols or isocyanates to yield polyurethane, whereas the additives may be chosen to yield the desired material properties such as hardness, color etc. In order to produce a multi-sectioned shoe sole, different material compositions are injected towards predefined locations of the molding cavity by regulating the material throughput.

Processes for manufacturing shoes in which the sole is attached to the upper by directly bonding between a cured injection molding material and the shoe upper are also referred to as direct soling. Direct soling differs in particular to a common alternative method for manufacturing shoes, which is based upon providing the shoe sole as a (prefabricated) separate component, which is subsequently glued to the shoe upper. Compared to an attachment by gluing direct soling has a number of advantages. Most importantly, the quality and durability of the bonding is substantially increased. While for glued shoe soles a partial or complete detachment can be observed at increased strains, such deleterious effects are negligible for directly soled shoe soles. Furthermore, using direct soling a continuous optical integration of the sole with the upper is achieved satisfying high aesthetic standards.

While direct soling provides a number of advantages there is potential for improvement in relation to the provision of multilayered shoe soles.

Known direct soling methods for multilayered shoes soles are based upon providing an outer sole, placing said outer shoe sole on a base stamp and bonding the outer sole to the upper by injecting molding material for a midsole in between the outer sole and the upper. The cavity for the midsole is herein defined by a lower boundary formed by the outer sole, an upper boundary formed by the shoe upper and side boundaries formed by lateral molding elements.

Such methods for a direct soling of multilayered shoes soles are for instance described in DE 360082 A1, DE 38 13 993 A1 or DE 1 729 141 A1.

For instance, DE 360082 A1 discloses the production of a shoe with an elastomer outer sole and a polyurethane midsole. In first step an elastomer material is injected into a molding frame to form the outer sole. Subsequently a reactive mixture for the polyurethane midsole is injected, which ensures at the same time a bonding of the midsole to the outer sole as well as a bonding of the midsole to a shoe upper.

While such direct soling processes result in a stable bonding of the outer sole, midsole and upper, the known methods offer limited design choices. In particular, the provision of multilayered shoe soles exhibiting additional features such as a midsole with air pockets, undercuts of midsole materials, toe caps, running sole tips or patches of outer sole material is not possible using the methods previously described in the art.

In the prior art some alternative methods for the direct soling of multilayered shoe soles exist for shoes or boots made of plastic or rubber, in particular in case the upper and midsole are produced from a single molding material.

For instance, DE 28 23 099 A1 discloses a method and apparatus for producing working or security boots using a single clamping unit. Herein, an upper and a midsole are produced in a first injection step from rubber or plastics. Subsequently, an outer sole, which may comprise a different a material is directly soled onto the midsole using the base stamp of the same clamping unit. Preferably, a metal sole may be placed onto the base stamp to strengthen the outer sole.

Likewise, AT No. 25 08 27 relates to a method for producing boots made of plastic, whereby during a first injection step the upper, a thin midsole and a core for a heel are produced in a single molding cavity. After letting the molding material cool the outer sole together with a coat for the heel are soled during a second injection step onto the midsole and the core of the heel.

Similarly, DE 1 629 737 A1 discloses a method for producing shoes from plastic or rubber using a single clamping unit, which involves providing in a first step a smaller molding cavity, injecting a midsole and subsequently enlarging the molding cavity to produce the entire sole including an outer sole.

However, these methods enable limited design choices for multilayered shoe soles and do not offer the possibility of special functional or aesthetic features.

In light of these difficulties, improved solutions are required for increasing the flexibility of providing multilayered shoe-soles using a direct soling process.

### SUMMARY OF THE INVENTION

An objective of the present application was to overcome the disadvantages of the prior art and to provide an alternative or improved method and injection molding system that allows for an increased flexibility for the design of a multilayered shoe sole, preferably enabling the inclusion of additional functional or aesthetic features, such as air pockets, undercuts of midsole materials, toe caps, running sole tip or partially visible outer soles.

The problem is solved by the features of the independent claims. Preferred embodiments of the present invention are provided by the dependent claims.

The invention preferably relates to a method for direct soling a multilayered shoe sole onto a shoe upper, comprising
- providing an injection molding system comprising two mold frames,
- positioning a last covered with the upper into a first mold frame to form a first molding cavity,
- injecting a first molding material into the first molding cavity to directly sole a first layer of the shoe sole onto the upper,
- subsequently, positioning the same last, covered with the upper and soled with the first layer, into the second mold frame to form a second molding cavity, and
- injecting a second molding material into the second molding cavity to directly sole a second layer of the shoe sole onto said first layer.

In contrast to known approaches in the prior art for a direct soling of a multilayered shoe sole, the method according to the invention is characterized by a distinct order of the soling of different layers, as well as the provision of two distinct sets of mold frames for each of the layers.

In particular, for the production of polyurethane based shoe soles, common methods rely firstly upon a provision of an outer sole, which is subsequently attached to the upper by injecting molding material for the midsole.

The inventors have realized that by reversing the order of injection, and by providing distinct sets of mold frames for the first and the second layers, a wealth of new design possibilities is achieved, which enables the provision of directly soled multilayer shoe soles with special features, such running sole tip, air pockets, heel caps, wedges etc. Such special features were previously only possible using conventional gluing techniques with the aforementioned disadvantages in regard to bonding stability and aesthetics.

The possibility of implementing special structural and functional features for a multi-layered shoe sole in a direct soling process is a direct consequence of reversing the order of soling of the layers and providing distinct sets of mold frames for both layers.

In case an outer sole (or an outer midsole layer) is first provided and a midsole is injected subsequently as an intermediate connecting component, the shape and design of the midsole is governed by the bottom surface of the upper (as an upper boundary) and the top surface of the outer sole (as a lower boundary). Lateral molding frame elements allow for some flexibility. However, a controlled overlapping e.g. of an outer sole up to the shoe upper to form a running sole tip or the inclusion of air pockets in the midsole is not feasible.

The method of the invention overcomes these limitations by introducing a further degree of design freedom in providing a distinct molding frame for the first and second layer and allowing the outer sole to be formed around or even intertwine with the midsole.

In particular, the first molding frame may be equipped as a "dummy" or blind base stamp, which will form the lower boundary of the first layer (e.g. the midsole). Advantageously, said dummy base stamp may be arbitrary designed depending on the desired structure or shape of the midsole and include structural elements such as bridges, ridges, pillars, pins, holes, grooves etc.

After positioning a last covered with the upper into the first mold frame and injecting a first molding material a first layer is directly soled onto the upper yielding a sole layer (e.g. a midsole) with a shape reflecting the structured base stamp. Subsequently, the upper with the (structured) first layer is transferred to a second mold frame. Herein, a second molding material is injected and preferably flows into the defined structural features (e.g. channels etc.) of the first layer. The second layer may thus be thus formed around the first layer (e.g. a midsole) or even intertwine with said first layer. Hereby, a number of features can be implemented into the multilayer shoe sole.

For instance, the outer sole may cover partially the midsole to connect to the upper, thereby forming a running sole tip or toe cap. Furthermore, it is also possible to provide multilayered shoe soles, wherein the outer sole is only partially formed on the midsole or even wherein the midsole and outer sole are only partially soled onto the upper, for instance to influence the rolling characteristics of the shoe.

The examples described herein illustrate a number of functional or aesthetic features that can be implemented in a direct soling multilayered process using the method described herein. It is noted however that the potential of the invention is not limited to these exemplary features, but by altering the design of the first and second mold frames, further features can be envisioned for producing multilayered shoe soles using a direct soling process.

As used herein the term "direct soling" preferably refers to an injection process that forms a layer of the shoe simultaneously whilst said layer is bonded to an upper or a previously formed layer of a shoe sole. To this end, for instance, duroplastic, thermoplastic or elastomeric synthetic materials may be used, which are preferably polymerizable and/or foamable, such that during a reaction of such materials the molding material (mixture) may form a shoe sole layer that is directly bonded to the upper or a previous layer. A direct soling process is distinct from processes involving the formation layer of a shoe sole and its subsequent attachment to an upper or a previous shoe layer by gluing.

During a typical injection molding process, an injection molding material is forcefully injected into an injection molding form in a closed position surrounding a cavity having a particular cavity shape. The injected molding material is held under pressure in the mold cavity, cooled, and then removed (demolded) as a solidified product having a shape that essentially duplicates the cavity shape of the mold. Throughout this document, the terms injection molding form system, multi-part injection molding form and injection molding form can be used synonymously.

As used herein the term "cavity" or "molding cavity" takes the ordinary meaning in the art and refers to a space in which the molded article, e.g. the layer of the shoe sole, is formed. The molding as such will be formed by limiting molding frames elements, which in preferred embodiments may comprise two lateral molding elements, a base stamp and a closing top element. The shaping of these elements governs the form of the molded article. During injection, the cavity may be open, in that only two lateral molding elements, optionally with a base element, are present, wherein the material is injected into the cavity for subsequent closure, for example with a shoe last or upper.

The molding cavity shall take the shape of a layer of a shoe sole. The term shoe as used herein means all forms of shoe which have a sole, including but not limited to, dress shoes, boots, sneakers, clogs, sandals, slip on sandals and shoes, golf shoes, tennis shoes, running shoes, athletic shoes, hiking shoes, ski boots, cycling shoes, soccer boots, and the like. The shoe sole shall encompass different kind of soles, but is characterized by a multilayered structure, comprising at least a first layer and a second layer.

The first layer of the shoe sole preferably refers to the layer of the shoe sole that is in direct contact with the upper, while the second layer of the shoe sole refers to a subsequent layer formed onto and/or around or otherwise in connection to said first layer. The first layer is preferably a midsole, while the second layer is an outer sole. It may however also be preferred that the first layer is a first layer of a midsole (or first midsole), while the second layer is a second layer of a midsole (or second midsole).

In preferred embodiments the shoes sole comprises two, three, four or more layers, such that for instance one, two, three or more layers for a midsole are successively soled onto the upper, while as a last layer an outer sole is applied on to the outermost midsole layer. As used herein an inner layer preferably refers to a layer of a shoe sole positioned relatively closer to the upper, while an outer layer preferably refers to a layer positioned relatively away from the upper.

In a preferred embodiment of the invention a first mold frame comprises two first lateral molding frame elements and a first base stamp, and the second mold frame comprises two second lateral molding frame elements and a second base stamp.

The lower closing element or base stamp is preferably an element of the set of molding frames, which is positioned at the bottom and preferably forms a lower boundary of the cavity in a closed position. It preferably defines the shape of the bottom part of the molded sole layer. It is preferred that the two sets of molding frames for the first and second layer differ in particular in regard to the base stamp or lower closing element.

For example, the second base stamp can be the element forming the bottom part of a multilayered shoe, e.g. an outer sole. To this end the second base stamp may exhibit a pattern or structured design for a running sole.

The first base stamp may preferably exhibit an arbitrary design depending on the desired shapes and include structural elements such as ridges or grooves that allow for the described flexibility in introducing novel features for the multilayered shoe soles.

The lateral mold frame elements preferably form the lateral part of the cavity, when in a closed position. With reference to a produced shoe sole or layer, the lateral mold frame preferably builds the shape of the lateral surface of the shoe sole or layer. Preferably, when the injection molding system is in a closed position and forms the cavity, the lateral mold frame wall comprises the (lateral) cavity wall or cavity walls.

The terms "mold frame" or "set of mold frame elements" may be used synonymously herein and refer to the mold frame elements that constitute the boundaries of a molding cavity. A "first mold frame" or a first "set of mold frame elements" preferably form the first molding cavity for the first layer (e.g. a midsole), while a "second mold frame" or a second "set of mold frame elements" preferably form the second molding cavity for the second layer (e.g. an outer sole)
During the injection process, an upper closing element typically closes the molding cavity from the top and may preferably be formed by a shoe last covered with upper.

By positioning the last into a first or second mold frame the respective molding cavities are preferably formed. To ensure a material-tight enclosure of the molding cavities it is preferred that the "last covered with the upper" or the "last covered with the upper and soled with the first layer" is clamped in between two laterally molding frame elements.

In a preferred embodiment the soling of the first shoe sole layer onto the upper in a first mold frame comprises the steps of:
- clamping the last that is covered with the upper by means of the first multiple lateral molding frame elements, such that the upper seals the top of the first molding cavity,
- injecting the first molding material via a sprue, preferably formed by the multiple first lateral molding frame elements, into the first molding cavity,
- raising the first base stamp such that the sprue is closed and allowing for a reaction of the first molding material to form the first layer of the shoe sole,
- lowering the first base stamp and opening the first lateral molding frame elements or vice versa to release the upper soled with the first layer from the first mold frame.

The term "multiple lateral molding frame elements" preferably refers to two or more lateral molding frame elements, which are shaped to allow for a material-tight clamping of the last covered with the upper.

The injection is initiated after the molding cavity is formed. To this end an injection molding system as described herein may be used. Typically, the injection molding system is constructed as a rotatable round table, wherein a control unit rotates the first mold frame in front of a nozzle mouthpiece of an injection unit such that a nozzle mouthpiece may connect with the sprue of the mold frame. Subsequently the control unit may initiate the mixing of the components of the molding material according to preset parameters. During the mixing of main material components, e.g. polyol and isocyanates (= PU), color additives, hardeners, blowing agents or other additives may be added in order to achieve the material characteristics desired for the first layer sole. The injection process itself may be likewise controlled by the control unit, which initiates the injection. Herein, the molding material mixture is preferably injected in the parameterized amount and speed via the sprue into the molding cavity.

Typically, the base element or base stamp subsequently is raised to a position that closes the sprue, such that no molding material can flow or foam out of the molding cavity back into the nozzle and injection unit. The material may now react according to predetermined parameters and will be ready to be taken out after a predetermined time.

Lowering the first base stamp and opening the first lateral molding frame elements or vice versa processing releases an upper sole with the first layer from the first mold frames in a desired shape and structure. Said upper may preferably be directly transferred to a second mold frame. Directly may refer to a time span in between the release and transfer of less than 60 sec, preferably less than 30 sec, but may also describe any longer time span resulting from a different positioning of the second mold frame on the rotary table

In a preferred embodiment soling the second shoe sole layer onto the first layer in the second mold frame comprises the steps of
- clamping the last that is covered with the upper and soled with a first layer with the second lateral molding frame elements such that the upper soled with a first layer seals the top of the second molding cavity,
- injecting the second molding material via a sprue, preferably formed by the second lateral molding frame elements, into the second molding cavity,
- raising the second base stamp such that the sprue is closed and allowing for a reaction of the second molding material to form the second layer of the shoe sole,
- lowering the second base stamp and opening the second lateral molding frame elements or vice versa processing to release the upper soled with the first and second layer from the second mold frame.

The injection steps may preferably be performed as described above for the first sole layer. For the injection of the second molding material the same sprue as for the first molding material or a different sprue may be used. However, the second molding material and mold frame is preferably distinct resulting in multilayered shoe sole with the desired characteristics and features.

Different multilayered shoes soles may be produced using the method described.

In a preferred embodiment the first layer of the shoe sole comprises or consists of a first midsole and the second layer of the shoe sole comprises or consists of an outer sole.

In some embodiments, the outer sole and midsole preferably differ in their material properties. The outer sole preferably consists of a particularly durable, weatherproof and/or nonslip material. The midsole may in preferred embodiments exhibit softer properties and provide a damping or cushioning for the wearer.

The shape, structure and optional features of the multilayered shoe sole are preferably governed by the structural elements of the first and second mold frame.

In a preferred embodiment the second mold frame comprises multiple second lateral molding frame elements and a second base stamp, wherein the second base stamp comprises a profile for a lateral and/or lower surface of a mid- and/or outer sole. Preferably the profile of the second base stamp may at least partial present a tread that may be conveyed onto the bottom of outer sole. Preferably the tread is tailored to the desired type of shoe. A person skilled in the art knows for instance which type of running treads may be preferred for a running shoe.

In one embodiment the second mold frame comprises multiple second lateral molding frame elements and a second base stamp, wherein the second base stamp comprises structuring elements, preferably structural elevations or depressions, more preferably selected from the group consisting of ridges, pillars, pins, holes and/or grooves.

In one embodiment the second mold frame comprises multiple second lateral molding frame elements and a second base stamp, wherein the second lateral molding frame elements comprises protruding structuring elements such as bridges or bars that may extent over the lateral dimension.

In a preferred embodiment the first mold frame comprises multiple first lateral molding frame elements and a first base stamp, wherein the first base stamp comprises structuring elements, preferably structural elevations or depressions, more preferably selected from the group consisting of ridges, pillars, pins, holes and/or grooves.

Structural elements for the first or second mold frame elements allow for an implementation of a variety of different feature as will become apparent in the following non-limiting examples.

### Embodiments relating to an over molding (e.g. to provide a running sole tip or a toe cap)

In one embodiment the soling of a multilayered shoe sole onto the upper comprises the steps of:
- clamping the last that is covered with the upper by means of the first lateral molding frame elements, such that the upper seals the top of the first molding cavity,
- injecting the first molding material for a midsole via a sprue into the first molding cavity,
- raising the first base stamp such that the sprue is closed and allowing for a reaction of the first molding material to form the midsole,
- lowering the first base stamp and opening the first lateral molding frame elements or vice versa to release the upper soled with the midsole from the first mold frame,
- transferring the last covered with the upper and soled with the midsole to a second mold frame,
- clamping the last that is covered with the upper and soled with a midsole with the second lateral molding frame elements such that the upper soled with the midsole seals the top of the second molding cavity,
- injecting the second molding material for an outer sole via a sprue into the second molding cavity,
- raising the second base stamp such that the sprue is closed, wherein the raising of the second base stamp results in the covering of outer sole molding material at least in parts over the midsole, preferably until a connection to the upper is made,
- allowing for a reaction of the molding material for an outer sole to form the outer sole,
- lowering the second base stamp and opening the second lateral molding frame elements or vice versa to release the upper soled with the midsole and outer sole from the second mold frame.

Since the embodiment encompasses a covering of outer sole material at least partially over the midsole it may also be referred to as "over molding".

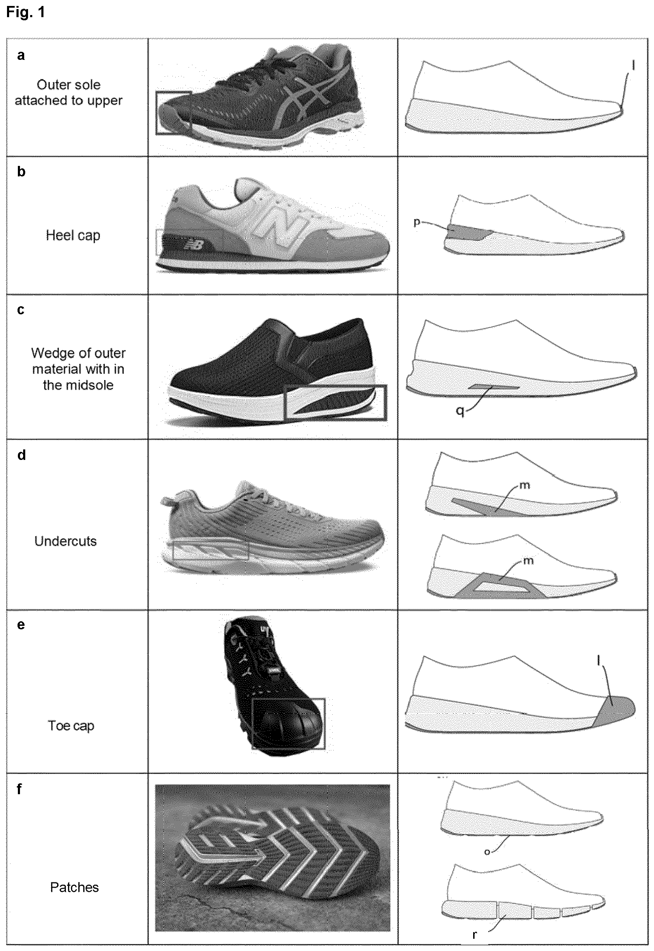

The embodiment allows for providing a two-layered shoe sole, the outer sole of which covers the upper directly and in particular above the upper blade and thus protects the upper from wear. Examples include running sole tip or a toe cap (see Fig. 1a or b)

Furthermore, the embodiment allows for the provision of footwear, wherein the multilayered sole is characterized by a flexible color separation, which is independent of previous limitations regarding undercut-free separation surfaces between a bottom stamp and lateral frame molding elements (see Fig. 1d)
The position and extent of the over molding features may be defined by the shape of the first and second molds.

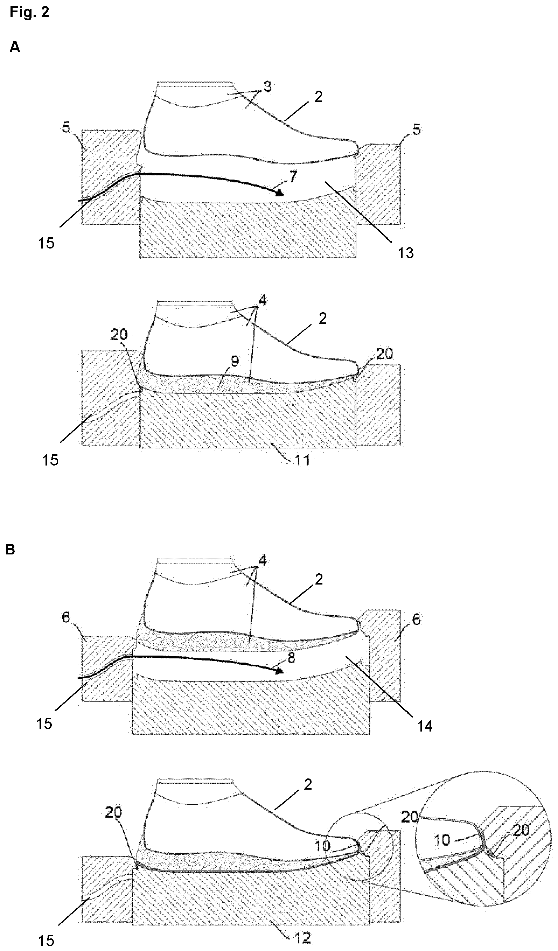

For instance, as illustrated in Fig. 2, in order to provide a multilayered sole with a running sole tip, the lateral molding frame elements may clamp the last covered with the upper at different vertical positions in the toe versus the heel region. For producing a running sole tip, it may be preferred that the first lateral molding frame elements clamp a last covered with the upper at a higher location at the heel end compared to the toe end. While preferably the midsole is thus formed around a heel end, the midsole does not extent over the toe region of the upper.

The second lateral molding frame elements may at the heel end clamp preferably the midsole in a lower region (e.g. oriented towards the bottom of the midsole), where at the toe end the second lateral mold frames clamp the last covered with the upper at a higher location (e.g. on the upper itself).

The clamping relates preferably to the establishment of a material-tight connection between the lateral mold frame elements with the last, the upper or a layer of the shoe sole. The material-tight connection preferably runs as continuous line around the circumference of the clamped shoe last covered with the upper or optionally sole layers attached thereto and thus defines the vertical extent which a molding material may reach. A "higher position" relates to a position oriented towards the upper, whereas a "lower position" relates to a position oriented towards the bottom of a shoe sole.

### Embodiments relating to an under molding (e.g. to provide a heel cap or a wedge of outer sole material within the midsole)

In one embodiment the soling of a multilayered shoe sole onto the upper comprises the steps of:
- clamping the last that is covered with the upper by means of the first lateral molding frame elements, such that the upper seals the top of the first molding cavity, wherein the first base stamp exhibits structural elevations such as ridges, pillars and/or pins
- injecting the first molding material for a midsole via a sprue into the first molding cavity,
- raising the first base stamp such that the sprue is closed, wherein the structural elevations such as ridges, pillars and/or pins seal with the upper and/or the first lateral molding frame elements to produce channels within the midsole and allowing for a reaction of the first molding material to form the midsole,
- lowering the first base stamp and opening the first lateral molding frame elements or vice versa to release the last covered with the upper and soled with the midsole from the first mold frame
- transferring the last covered with the upper and soled with the midsole to a second mold frame
- clamping the last that is covered with the upper and soled with a midsole with the second lateral molding frame elements such that the upper soled with the midsole seals the top of the second molding cavity,
- injecting molding material for an outer sole via a sprue into the second molding cavity,
- raising the second base stamp such that the sprue is closed, wherein the outer sole molding material flows through channels or other structures within the midsole towards upper regions of the second molding cavity
- allowing for a reaction of the molding material for an outer sole to form the outer sole,
- lowering the second base stamp and opening the second lateral molding frame elements or vice versa to release the upper soled with the midsole and outer sole from the second mold frame.

The embodiment preferably thus encompasses a flowing of outer sole material through (inner) channels of the midsole towards upper regions of the cavity, wherein the outer sole material may contact the second lateral molding frames and solidify as visible features. The process may also be referred to as "under molding".

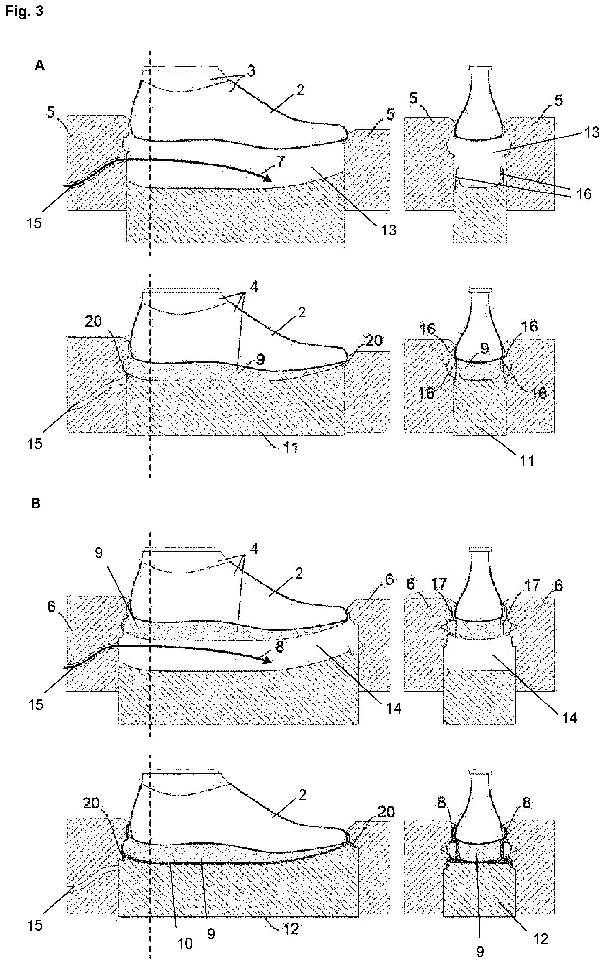

The embodiment allows for instance for providing a two-layered shoe sole, the outer sole of which covers the upper directly and does not exhibit visible connection to the bottom of the outsole. Hereby, it is possible to structurally support or color certain areas of the shoe as desired (e.g. by providing a heel cap see Fig. 1b). In some embodiments the first base stamp may exhibit at least two ridges that are oriented along the length of the base stamp and positioned symmetrically towards the left and right lateral sides, such that a channel for an under molding of outer sole material at said sites is established (see Fig. 3, cross-sectional view).

Moreover, the embodiment allows for producing shoes with two-layered soles, wherein the outsole material is placed inside the midsole with no visible connection either to the upper or the bottom of the outer sole. Hereby, it is possible to visibly or structurally support certain areas within the midsole (e.g. pronation support or wedges see Fig. 1c).

### Embodiments relating to the molding of patches (e.g. of outer sole material on a midsole)

In one embodiment the soling of a multilayered shoe sole onto the upper comprises the steps of:
- clamping the last that is covered with the upper by means of the first lateral molding frame elements, such that the upper seals the top of the first molding cavity
- injecting the first molding material for a midsole via a sprue into the first molding cavity,
- raising the first base stamp such that the sprue is closed and allowing for a reaction of the first molding material to form the midsole,
- lowering the first base stamp and opening the first lateral molding frame elements or vice versa to release the last covered with the upper and soled with the midsole from the first mold frame
- transferring the last covered with the upper and soled with the midsole to a second mold frame
- clamping the last that is covered with the upper and soled with a midsole with the second lateral molding frame elements such that the upper soled with the midsole seals the top of the second molding cavity, wherein the second lateral molding frame elements exhibit bridges or bars, which extent laterally directly underneath the midsole such that some bottom parts of the midsole are contacted by said bridges or bars
- injecting the second molding material for an outer sole via a sprue into the second molding cavity,
- raising the second base stamp such that the sprue is closed, wherein the second base stamp preferably exhibits structural depressions, such as grooves or holes, which are complementary to said bridges or bars, such that raising of the second base stamp results in a direct soling of outer sole material onto the midsole except for the parts covered by the bridges or bars
- allowing for a reaction of the molding material for an outer sole to form the outer sole,
- lowering the second base stamp, wherein parts of outer sole material positioned underneath said bridges or bars detach and opening the second lateral molding frame elements or vice versa to release the upper soled with the midsole and patches of an outer sole from the second mold frame.

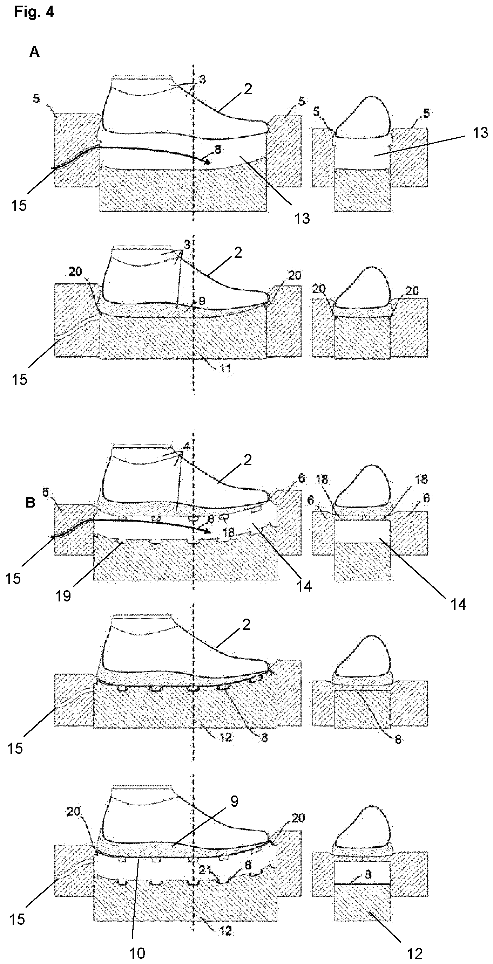

The embodiment preferably thus encompasses a direct soling of outer sole material on to the midsole except for those parts, where bridges or bars extending laterally across the molding cavity cover the midsole. Instead the outer sole material may flow at said sites underneath the bridges or bars, but will detach at these sites upon lowering the (second) base stamp (see Fig. 4). As a result an outer sole with a desired pattern of patches may be achieved. The process may also be referred to as "molding of patches".

The embodiment allows for providing a two-layered shoe sole, the outer sole of which is only to be molded onto certain areas of the midsole, e.g. in order to influence the rolling behavior (see Fig. 1f, top).

Moreover, it is also possible to produce shoes with two-layered soles, in which both the midsole and the outsole are only to be molded onto certain areas of the upper, e.g. in order to influence the rolling behavior. To this end it may be preferred to include in addition bridges or bars for the first lateral molding frame elements, such that the midsole is only directly soled onto desired parts of the upper (or Fig. 1f, bottom).

### Embodiments relating to the producing midsoles with air pockets

In one embodiment the soling of a multilayered shoe sole onto the upper comprises the steps of:
- clamping the last that is covered with the upper by means of the first lateral molding frame elements, such that the upper seals the top of the first molding cavity, wherein the first base stamp exhibits structural elevations such as ridges, pillars and/or pins,
- injecting the first molding material for a midsole via a sprue into the first molding cavity,
- raising the first base stamp such that the sprue is closed and allowing for a reaction of the first molding material to form the midsole, wherein the structural elevations such as ridges, pillars and/or pins impede a solidification of the molding material in a space, which will form air openings,
- lowering the first base stamp and opening the first lateral molding frame elements or vice versa to release the upper soled with the midsole from the first mold frame, wherein the midsole comprises air openings which reflect the shape of said structural elevations,
- transferring the last covered with the upper soled with the midsole to a second mold frame,
- clamping the last that is covered with the upper and soled with a midsole with the second lateral molding frame elements such that the upper soled with the midsole seals the top of the second molding cavity,
- injecting molding material for an outer sole via a sprue into the second molding cavity,
- raising the second base stamp such that the sprue is closed, wherein the outer sole material only partially enters said air openings reflecting the shape of the structural elevations such that air pockets are produced at the respective sites and allowing for a reaction of the molding material for an outer sole to form the outer sole,
- lowering the second base stamp and opening the second lateral molding frame elements or vice versa to release the upper soled with the midsole comprising air pockets from the second mold frame.

The structural elevations preferably exhibit a height that may substantially extent over the width of the midsole without contacting the upper. Moreover, it is preferred that the structural elevations exhibit a cross section with a characteristic dimension that is substantially smaller than said height. Thereby, narrow openings within the midsole are achieved, which ensure that the outer sole material only partially enters the air openings and air pockets are produced. In particular preferred embodiments the structural elevations are pillars, with preferably a height of more than 50%, preferably more than 60%, 70% of the thickness of the midsole layer and/or a diameter of less than 50%, preferably 40%, 30% of said height.

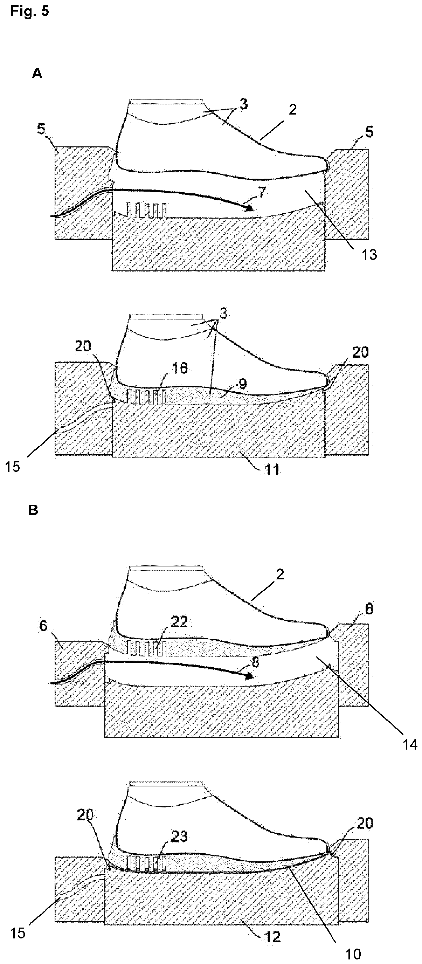

The embodiment preferably thus allows for the production of midsoles with air pockets according to a desired size and shape using a direct soling process to allow for instance for an improved dampening of the shoe sole (see Fig. 5). The air pockets advantageously allow for a dampening and may therefore also be referred to as air cushions.

The aforementioned embodiment relates in particular to a direct soling of a multilayered shoe sole, wherein a first shoe sole layer is a midsole and a second shoe sole layer is an outer sole.

However, for some applications a multilayered midsole may be preferred. Advantageously the method described herein allows also for such applications an increased flexibility and the inclusion of novel functional or aesthetic features, which were previously not possible using a direct soling process.

In a preferred embodiment the first layer of the shoe sole comprises or consists of a first midsole and the second layer of the shoe sole comprises or consists of a second midsole.

In a preferred embodiment the second mold frame comprises multiple second lateral molding frame elements and a second base stamp onto which a prefabricated outer sole is positioned.

Structural elements for the first or second mold frame elements may be included as described above and allow for a similar variety of functional or aesthetic features. However, the over molding, under molding or patch-like implementation is now achieved for a second molding material forming a second midsole (instead of an outer sole as described above).

The first and second midsole may differ in terms of functional properties, such as hardness, elasticity or abrasion as well as aesthetic properties such as color or surface roughness (e.g. glossy versus matt).

### Embodiments relating to producing multilayered shoe soles using prefabricated components

In one embodiment the soling of a multilayered shoe sole onto the upper comprises the steps of:
- clamping the last that is covered with the upper by means of the first lateral molding frame elements, such that the upper seals the top of the first molding cavity,
- injecting the first molding material for a first midsole via a sprue into the first molding cavity,
- raising the first base stamp such that the sprue is closed and allowing for a reaction of the first molding material to form the first midsole,
- lowering the first base stamp and opening the first lateral molding frame elements or vice versa to release the last covered with the upper and soled with the first midsole from the first mold frame,
- transferring the last covered with the upper soled with the midsole to a second mold frame,
- clamping the last that is covered with the upper and soled with a first midsole with the second lateral molding frame elements such that the upper soled with the first midsole seals the top of the second molding cavity, wherein a prefabricated outer sole is positioned on the second base stamp,
- injecting molding material for a second midsole via a sprue into the second molding cavity,
- raising the second base stamp such that the sprue is closed and allowing for a reaction of the molding material for a second midsole to form a second midsole, which bonds the positioned prefabricated outer sole with the first midsole,
- lowering the second base stamp and opening the second lateral molding frame elements or vice versa to release the upper soled with a multilayered sole comprising a first midsole, a second midsole and a prefabricated outer sole from the second mold frame.

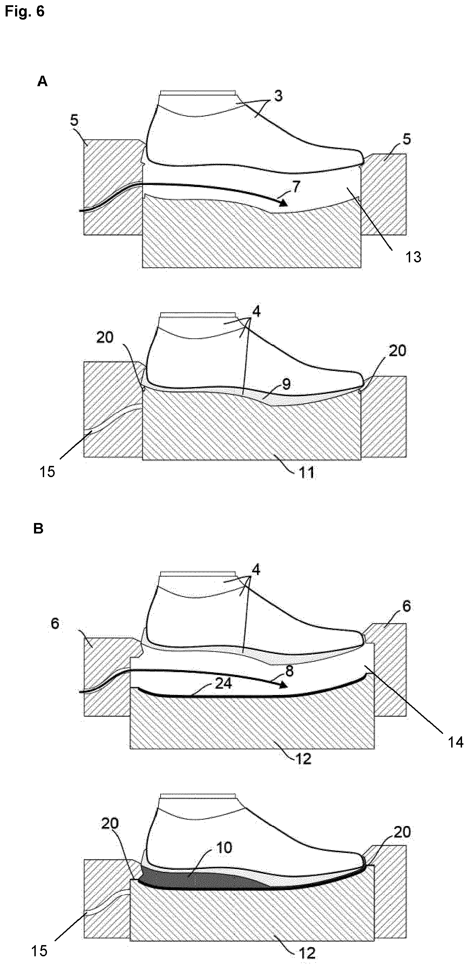

Features that have been achieved for an outer sole material as a second sole layer as described above, may now be achieved for a second midsole as a second sole layer. For instance, the second base stamp may be raised such that the molding material for the second midsole at least in parts covers the first midsole, preferably until a connection to the upper is established, e.g. for providing a toe cap made of the material of the second midsole. A person skilled in the art understands that similar to the over molding of an outer sole, it may be preferred to this end that lateral molding frame elements clamp the last covered with the upper at different vertical positions in the toe versus the heel region (see Fig. 6).

However, also other features such as an under molding for the second midsole, e.g. by using a first base stamp comprising structural elevations such as ridges, pillars and/or pins are possible.

The embodiment may thus be combined with the previous embodiments to allow for an introduction of functional or aesthetic features in regard to a multilayered midsole, which in addition may serve as a bonding connection to a prefabricated outer sole.

In a preferred embodiment the method is characterized in that the first and second molding materials are provided prior to injection by mixing one or more base materials with one or more additives, wherein the one or more base materials are preferably a polyol and an isocyanate, such that a polyurethane is formed as a molding material and/or wherein the one or more additives are selected from a group comprising a color additive, a hardener, a softener, a crosslinker, gasing agent, a propellant, a cell opener or a stabilizer.

In a further preferred embodiment of the method duroplastic, thermoplastic or elastomeric synthetic materials are used, which are preferably polymerizable and/or foamable, such as but not limited to solid or foamed polyurethane, thermoplastic elastomers (TPE), sometimes referred to as thermoplastic rubbers, such as thermoplastic polyurethanes (TPU), thermoplastic co-polyester or thermoplastic polyamides.

For such synthetic materials the direct soling of a multilayered shoe sole may be implemented with a particular high precision.

A person skilled in the art understands that the molding material for a first and second layer are preferably distinct and can be chosen according to the desired functional and aesthetic characteristics of said layers.

The invention further relates to a use of the method as described herein to produce a shoe with a multilayer shoe sole exhibiting features selected from the group consisting of a midsole with air pockets, undercuts of midsole material, sole parts made from an outer sole material directly connecting with the upper, for instance forming a toe cap or a running sole tip, sole parts made from an outer sole material disconnected from the bottom outer sole, for instance for providing a heel cap or wedges, or a bottom sole exhibiting disjunct patches of outer sole material.

The invention further relates for an injection molding system for direct soling a multilayered shoe sole onto a shoe upper, comprising
- an injection unit;
- a mold frame for receiving a shoe last covered with an upper to form a molding cavity,
- a control unit
wherein the injection unit is connectable to the mold frame, such that molding material is injectable into the molding cavity to form a layer of a shoe sole, wherein
the injection molding system comprises two mold frames, and the control unit is configured for:
- positioning a last covered with the upper into a first mold frame to form a first molding cavity,
- injecting a first molding material into a first molding cavity to directly sole a first layer of the shoe sole onto the upper,
- subsequently, positioning the last covered with the upper and soled with the first layer into the second mold frame to form a second molding cavity,
- injecting a second molding material into the second molding cavity to directly sole a second layer of the shoe sole onto said first layer.

A person skilled in the art understands that technical features and advantages that have been disclosed in regard to the method for direct soling a multilayered shoe sole onto a shoe upper equally apply to an injection molding system described herein and vice versa.

As used herein the "injection unit" refers to a device, an apparatus or a system that allows for the injection of molding material into a cavity. Different injection units are known in the prior art and may be employed in the system according to the invention. One example is the unit described in DE 10 2015 108 086.

A typical injection unit will comprise an inlet for the provision of molding material, which may e.g. be stored e.g. in a molding material reservoir. In case the molding material relates to duroplastic and/or thermoplastic synthetic components, such as base materials and additives (which may be polymerizable and/or foamable) the injection unit may comprise a mixing head for mixing said components and inlets for allowing for the provision of the components to the mixing head. As described herein the injection unit shall however not be limited to such embodiments, but may encompass any device configured for the injection of a preferably liquid or foamable molding material.

In a preferred embodiment the injection unit comprises a nozzle and the mold frames each comprise multiple lateral molding frame elements forming a sprue, wherein the nozzle is connectable to the sprue to inject molding material into a molding cavity to form a layer of a shoe sole.

As used herein the term "nozzle" preferably refers an outlet passage of the injection unit from where the molding material may be injected into a molding cavity. To this end, the nozzle is connectable to a sprue. The injection unit may comprise for instance a nozzle mouthpiece that is geometrically configured to match the entrance of a sprue such that upon translating the nozzle towards the sprue, a fluid connection between the injection unit and the sprue is formed.

It is further preferred that the connection of the nozzle mouthpiece and the sprue is largely sealed in order avoid any leakage of the molding material. The sealing preferably results in a material-tight or airtight connection and may e.g. be ensured by pressing a nozzle mouthpiece against the housing of the sprue. To this end it can also be preferred in some embodiments to provide additional sealing means, such as a sealing ring. It is preferred in some embodiments that the injection unit comprising the nozzle is translatable, it may however also be preferred that the sprue can be translated in order to form the connection. To this end the injection molding system may comprise any suitable translation mechanism including but without limitation to a linear actuator.

It is preferable in some embodiments that the injection unit comprising the nozzle is in a horizontal or near horizontal position with respect to the molding cavity into which the molding material is injected. The propagation direction of the molding material within the nozzle as well as the sprue is thus preferably horizontal or near horizontal. In other embodiments the nozzle may be positioned above or below (e.g. vertically or near vertically) the entrance to the sprue, for example if the sprue comprises a right angle or near right angle bend in order to eject the molding material in an essentially horizontal direction into the molding cavity.

After connecting the nozzle with the sprue, the molding material may flow into the sprue channel. The speed and pressure of the flow rate is controllable via the material input into the injection unit. The rate of the material input is preferably controlled by the control unit.

As used herein, the "control unit" preferably refers to any computing device or system having a processor, a processor chip, a microprocessor or a microcontroller to allow for an automatic control of the components of the injection molding system, such as the injection unit or the mold frames. The components of the computer system may be conventional or custom-configured for the particular implementation. Preferably the computer system has a processor, an input device such as a keyboard or mouse, a memory such as a hard drive and volatile or nonvolatile memory, and computer code (software) for controlling the components of the injection molding machine.

The control unit may also comprise a programmable printed circuit board, microcontroller, or other device for receiving and processing data signals from the components of the system such as the clamping of a last covered with an upper with a respective mold frame or the position of the nozzle with respect to the sprue.

The control unit preferably further comprises a computer-usable or computer-readable medium, such as a hard disk, a random access memory (RAM), a read-only memory (ROM), a flash memory etc., on which a computer software or code is installed. The computer code or software to perform the control of the components of the injection molding system may be written in any programming language or model-based development environment, such as but not limited to C/C++, C#, Objective-C, Java, Basic/VisualBasic, MATLAB, Simulink, StateFlow, Lab View, or assembler.

The computer software, and any functional descriptions of the computer software by description of controlling particular devices or aspects of the system described herein, are considered technical features due to a direct physical output on the manufacturing system. Functional descriptions of software may therefore be considered as preferred and defining embodiments of the invention. The particular computer code employed is available to a skilled person and may be constructed accordingly using standard knowledge.

The term "control unit is configured to" perform a certain operational step, such as position a last in the respective mold frames and initiating an injection process, may encompass a custom-designed or standard software installed on said control unit that initiates and regulates these operational steps. Steps that have been described in relation to the method are preferably conducted by a control unit configured to this end.

As used herein the term "sprue" preferably refers to a channel or a plurality of channels situated upstream of the cavity, through which the molding material passes from the injection unit into the cavity. The sprue therefore may be considered as a feeding channel, for example when an unbranched sprue (single feeding channel) is evident. The feeding channel refers in some embodiments preferably to the part of the sprue that directly leads into the molding cavity. In preferred embodiments, the sprue comprises a single feeding channel leading into the molding cavity. It may however also be preferred to have a branched sprue, comprising multiple feeding channels, leading into multiple separate molding cavities, or a single molding cavity with multiple inlets. As used herein, the term upstream and downstream are used in relation to the propagation direction of the molding material, wherein inlets for the provision of molding material will be upstream of the molding cavity.

Preferably, in some embodiments, the term "sprue" in the present invention does not relate to a solidified plastic piece of an injection-molding manufactured item remaining after injection, cooling and release of the item from an enclosed injection system. In some embodiments, the molding material is not allowed to cool, set or react to completion to leave a solid portion of the molding material in the sprue. The sprue is preferably emptied after injection prior to the next injection event.

In some embodiments, the sprue is emptied item for item, in other words between items, that are to be manufactured. For example, after the completion of one shoe sole layer (e.g. a first or second sole layer) the sprue is emptied by ejecting material remaining in the sprue, before a new cavity is filled using the device or system of the present invention.

In some embodiments, the method of the invention employs automated or semi-automated manufacture of multiple items, i.e. one after the other. In some embodiments, the cavities and/or the injection units rotate about an axis, such that the injection unit remains stationary and a rotating or sliding array of multiple cavities is "presented to" the injection unit, or the injection unit rotates about a ring of cavities or slides along an array of cavities, thereby moving from one cavity to the next upon completion of the injection. In such embodiments, the sprue is preferably emptied between items/cavities, while the sprue can, but must not be emptied between different materials injected into a single cavity. The sprue can also be emptied by injecting air into the sprue, by separating two halves of a sprue block, e.g. formed by the lateral molding frame elements, if for example the material has set/polymerized, or by other means.

In a preferred embodiment of the invention, the injection unit comprises a mixing head with at least one, preferably at least two valve inlets for one or more base materials and one or more additives, wherein the mixing head is configured to mix the one or more base materials with the one or more additives to form the molding material.

Preferably, the mixing head comprises a mixing screw within a mixing chamber to which the at least one, preferably at least two valve inlets are connected, such that the one or more base materials and the one or more additives are mixable to form the molding material.

Using a single valve inlet for the one or more base materials and the one or more additives may be particularly suited for producing unitary sole layers, wherein the same composition of molding material is used for manufacturing the entire shoe sole layer, i.e. a first molding material for a first layer and a second molding material for a second layer.

In some embodiments it may be preferred to provide multiple sections for either the first and/or second layer of the shoe sole. Hereby, multi-sectioned and multilayered shoe sole may be provided using a direct soling method and system as described herein.

In a preferred embodiment for a step in soling a first layer of a shoe sole onto an upper the control unit is configured to
- mix a first type of molding material and inject said a first type of molding material in to a first section of the first molding cavity; and subsequently mix a second type of molding material and inject said second type of molding material into a second section of the first molding cavity to directly sole a multi-sectioned first layer of the shoe sole onto the upper.

In a preferred embodiment for a step in soling a second layer of a shoe sole onto an upper the control unit is configured to
- mix a first type of molding material and inject said first type of molding material into a first section of the second molding cavity; and subsequently mix a second type of molding material and inject said second type of molding material into a second section of the second molding cavity to directly sole a multi-sectioned second layer of a shoe sole onto a first layer.

In preferred embodiments also three or more types of molding materials may be injected towards three or more sections of a shoe sole layer.

Any combination of the above-mentioned embodiments may be envisioned. It may be preferred to provide a multi-sectioned first and second layer, e.g. by injection four or more different types of molding materials. It may also be preferred to produce a unitary first and a multi-sectioned second layer or vice versa.

In a preferred embodiment the injection molding system comprises three, four or more pairs of mold frames mounted on a rotatable table, wherein the control unit is preferably configured for rotating each of the mold frames to connect to a stationary injection unit. A pair of mold frames preferably refers to a first and second mold frame suited for the soling of a first and second layer as described herein. It may be preferred that the injection molding system comprises two types of such pairs for a left and right shoe respectively.

A first type of a pair of the mold frames for a left shoe, may comprises a first and second mold frame for soling a first and second layer onto a last covered with upper, wherein the lateral frame mold elements are designed for a left foot.

A second type of a pair of the mold frames for a right shoe, may comprises a first and second mold frame for soling a first and second layer onto a last covered with upper, wherein the lateral frame mold elements are designed for a right foot.

In total such an injection molding system may thus comprise four distinct sets of molding frame elements, that is two sets for left and right footwear, each.

### DETAILED DESCRIPTION OF THE INVENTION AND EXAMPLES

It should be understood that various alternatives to the embodiments of the invention described herein may be employed in practicing the invention. It is intended that the claims of the invention define the scope of the invention and that the method and apparatus within the scope of these claims and their equivalents are covered thereby.

Without intending to be limiting, the invention will be explained in more detail with reference to exemplary embodiments and the following figures:

### Brief description of the figures

- Fig. 1: Illustration of multilayered shoe soles with special features that are possible using a direct soling process as described herein.
- Fig. 2: Illustration of preferred method steps for an "over molding" of a midsole with outer sole material, e.g. to provide a running sole tip or a toe cap.
- Fig. 3: Illustration of preferred method steps for an "under molding" of outer sole material through channels of a midsole, e.g. to provide a heel cap or a wedge of outer sole material within the midsole (left: longitudinal sectional view, right: cross sectional view).

- Fig. 4: Illustration of preferred method steps for the molding of "patches", e.g. patches of outer sole material on a midsole (left: longitudinal sectional view, right: cross sectional view).
- Fig. 5: Illustration of preferred method steps producing midsoles with air pockets.
- Fig. 6: Illustration of preferred method steps for producing multilayered shoe soles using prefabricated components, e.g. prefabricated outer soles.

### Detailed description of the figures

Processes for the manufacturing of shoe soles using injection molding systems as for instance described in DE 10 2015 108 086 or US Patent 3,915,608 typically include the following steps:
1. The control unit initiates rotation of the rotary table / movement of the clamping unit in front of the reaction casting unit
2. The mold frame or clamping unit, in which a molding cavity may be formed by means of two lateral molding elements, a base stamp and a shaft covered with an upper as a closing element, rotates / is moved in front of the nozzle mouthpiece of an injection unit.
3. The control unit initiates the translation of the injection unit to drive the nozzle mouthpiece against the sprue of the mold frame
4. The control unit initiates the mixing of the components of the molding material according to preset parameters. Within a mixing chamber of a mixing head of the injection unit chemical components of the required formulation are mixed and transported by means of a mixing screw into the mouthpiece. Within the mixing chamber the material is mixed through a mixing screw rotating at approx. 15,000 - 18,000 rpm. During the mixing of the main material components polyol and isocyanates (= PU), color additives, hardeners, blowing agents or other additives may be added at the same time in order to achieve the material characteristics required for the sole.
5. The control unit initiates the injection process. The molding material mixture is injected in the parameterized amount and speed via the sprue into the molding cavity. The distribution of the molding material is governed by the impact point of the molding material and the selected viscosity.
   Unitary shoes soles will have the same characteristics (hardness, density, color, rebound, etc) along the length, width and thickness of the sole. For a multi-section injection process as e.g. described in DE 10 2015 108 086 A, the shoe sole can be subdivided into different sections with different characteristics (e.g. regarding hardness etc.).
6. The control unit initiates termination of the injection process. To this end the inlets of the mixing head for receiving components of molding material are closed and the mixing and transport of the molding material is terminated.
7. The control unit initiates the raising of the base element. Typically, the base element is raised to a position that closes the sprue, such that no molding material can flow or foam out of the molding cavity back into the nozzle and injection unit.
8. In order to produce further shoe soles the control unit initiates a rotation or other preferred movement towards the next position.
9. The material will now react according to predetermined parameters and will be ready to be taken out after a predetermined time.
10. After the predetermined reaction time, the lateral mold frames are opened and the base stamp is lowered or vice versa. In addition, the last covered with the upper, soled with a midsole and/or outer sole is lifted, such that the soled shoe floats freely in the cavity and be removed.

A direct soling process for a multilayered shoe sole in the prior art was based on first inserting or injecting an outsole into the bottom stamp (PU, TPU or rubber with respective reaction times) and then injecting the PU material for the midsole, thereby permanently connecting the shoe sole (lower limit of the cavity) and the shoe shaft (upper limit of the cavity).

As described herein the method according to the invention differs by a reversed order for soling the layers and providing distinct sets of mold frames for the first layer (e.g. midsole) and the second layer (e.g. an outer sole).

Thereby, the provision of multilayer shoe soles with special features such running sole tip, air pockets, heel caps, wedges etc. is possible for the first time using a direct soling process (see Fig. 1).

The following examples illustrate preferred embodiments on how to structure the first, second mold frames and/or the injection process in order to yield the desired special features.

Fig. 2 illustrates preferred method steps for a "over molding" (e.g. to provide a running sole tip or a toe cap). Fig. 2A illustrates the processing of a shoe last covered with an upper in a first clamping unit or first mold frame, while Fig. 2B illustrates the subsequent processing of a shoe last covered with an upper and soled with a first layer in a second clamping unit or second mold frame,

The depicted method comprises the steps of:
- clamping the last that is covered with the upper **3** by means of the first lateral molding frame elements **5**, such that the upper **2** seals the top of the first molding cavity **13,**
- injecting the first molding material **7** for a midsole via a sprue **15** into the first molding cavity **13**,
- raising the first base stamp **11** such that the sprue **15** is closed and allowing for a reaction of the first molding material **7** to form the midsole **9**,
- lowering the first base stamp **11** and opening the first lateral molding frame elements **5** or vice versa to release the upper **2** soled with the midsole **9** from the first mold frame and - if necessary - removing the flash **20**
- transferring the last covered with an upper and soled with the midsole **4** to a second mold frame
- clamping the last that is covered with the upper and soled with a midsole **4** with the second lateral molding frame elements **6** such that the upper **2** soled with the midsole **9** seals the top of the second molding cavity **14**,
- injecting a second molding material **8** for an outer sole via a sprue **15** into the second molding cavity **14**,
- raising the second base stamp **12** such that the sprue **15** is closed, wherein the raising of the second base stamp **12** results in the covering of outer sole molding material **8** at least in parts over the midsole **9**, preferably until a connection to the upper **2** is made
- allowing for a reaction of the molding material **8** for an outer sole to form the outer sole **10**,
- lowering the second base stamp **12** and opening the second lateral molding frame elements **6** or vice versa to release the upper **2** soled with the midsole **9** and the outer sole **10** from the second mold frame and removing the flash **20.**

The example allows for instance for providing a two-layered shoe sole, the outer sole of which covers the upper directly and thus protects the upper from wear (e.g. to form a running sole tip or a toe cap, see Fig. 1a or Fig. 1e) Moreover, the embodiment allows for the provision of footwear, wherein the multilayered sole is characterized by a flexible color separation, which is independent of previous limitations regarding undercut-free separation surfaces between a bottom stamp and lateral frame molding elements (see Fig. 1 d).

Fig. 3 illustrates the preferred method steps for an "under molding" (e.g. to provide a heel cap or a wedge of outer sole material within the midsole). Fig. 3A illustrates the processing of a shoe last covered with an upper in a first clamping unit or first mold frame, while Fig. 3B illustrates the subsequent processing of a shoe last covered with an upper and soled with a first layer in a second clamping unit or second mold frame,

The depicted method comprises the steps of:
- clamping the last that is covered with the upper **3** by means of the first lateral molding frame elements **5**, such that the upper **2** seals the top of the first molding cavity **13**, wherein the first base stamp **11** exhibits structural elevations **16** such as ridges, pillars and/or pins,
- injecting the first molding material **7** for a midsole via a sprue **15** into the first molding cavity **13**,
- raising the first base stamp **11** such that the sprue **15** is closed, wherein the structural elevations **16** such as ridges, pillars and/or pins seal with the upper **2** and/or the first lateral molding frame elements **5** to produce channels **17** within the midsole **9** and allowing for a reaction of the first molding material **7** to form the midsole **9**,
- lowering the first base stamp **11** and opening the first lateral molding frame elements **5** or vice versa to release last covered with the upper **2** and soled with the midsole **9** from the first mold frame and - if necessary - removing the flash **20**,
- transferring the last covered with the upper and soled with the midsole **4** to a second mold frame,
- clamping the last that is covered with the upper and soled with a midsole **4** with the second lateral molding frame elements **4** such that the upper **2** soled with the midsole **9** seals the top of the second molding cavity **14**,
- injecting the second molding material **8** for an outer sole via a sprue **15** into the second molding cavity **14**,
- raising the second base stamp **12** such that the sprue **15** is closed, wherein the outer sole molding material **8** flows through channels **17** within the midsole **9** towards upper regions of the second molding cavity **14**,
- allowing for a reaction of the molding material **8** for an outer sole to form the outer sole **10**,
- lowering the second base stamp **12** and opening the second lateral molding frame elements **6** or vice versa to release the upper **2** soled with the midsole **9** and outer sole **10** from the second mold frame and removing the flash **20.**

The embodiment allows for instance for providing a two-layered shoe sole, the outer sole of which covers the upper directly and does not exhibit visible connection to the bottom of the outsole. Hereby, it is possible to structurally support or color certain areas of the shoe as desired (e.g. by providing a heel cap see Fig. 1b). To this end the first base stamp may exhibit at least two ridges that are oriented along the length of the base stamp and positioned symmetrically towards the left and right lateral sides as depicted. Moreover, the example allows for producing shoes with two-layered soles, wherein the outer sole material is placed inside the midsole with no visible connection either to the upper or the bottom of the outer sole. Hereby, it is possible to provide a visible or structural support to certain areas within the midsole (e.g. pronation support, preferably as wedges see Fig. 1c).

Fig. 4 illustrates the method steps for a preferred molding of "patches" (e.g. patches of outer sole material on a midsole). Fig. 4A illustrates the processing of a shoe last covered with an upper in a first clamping unit or first mold frame, while Fig. 4B illustrates the subsequent processing of a shoe last covered with an upper and soled with a first layer in a second clamping unit or second mold frame,
The depicted method comprises the steps of:
- clamping the last that is covered with the upper **3** by means of the first lateral molding frame elements **5**, such that the upper **2** seals the top of the first molding cavity **13**
- injecting the first molding material **7** for a midsole via a sprue **15** into the first molding cavity **13**,
- raising the first base stamp **11** such that the sprue **15** is closed and allowing for a reaction of the first molding material **7** to form the midsole **9**,
- lowering the first base stamp **11** and opening the first lateral molding frame elements **5** or vice versa to release the last **4** covered with the upper **2** and soled with the midsole **9** from the first mold frame and - if necessary - removing the flash **20,**
- transferring the last **4** covered with the upper **2** and soled with the midsole **9** to a second mold frame
- clamping last **4** covered with the upper **2** and soled with the midsole **9** with the second lateral molding frame elements **6** such that the upper **2** soled with the midsole **9** seals the top of the second molding cavity **14**, wherein the second lateral molding frame **6** elements exhibit bridges or bars **18**, which extent laterally directly underneath the midsole **9** such that some bottom parts of the midsole **9** are contacted by said bridges or bars **18,**
- injecting the second molding material **8** for an outer sole via a sprue **15** into the second molding cavity **14**,
- raising the second base stamp **12** such that the sprue **15** is closed, wherein the second base stamp **12** preferably exhibits structural depressions **19**, such as grooves or holes, which are complementary to said bridges or bars **18**, such that raising of the second base stamp **12** results in a direct soling of outer sole material **8** onto the midsole **9** except for the parts covered by the bridges or bars **18**
- allowing for a reaction of the molding material **8** for an outer sole to form the outer sole **10**,
- lowering the second base stamp **12**, wherein parts of outer sole material **8** positioned underneath said bridges or bars **18** detach at tearing edges **21**
- opening the second lateral molding frame elements **6** to release the upper **2** soled with the midsole **9** and patches of an outer sole **10** from the second mold frame and removing flash **20.**

The embodiment allows for providing a two-layered shoe sole, the outer sole of which is only to be molded onto certain areas of the midsole, e.g. in order to influence the rolling behavior (see Fig. 1f, top). Moreover, it is also possible to produce shoes with two-layered soles, in which both the midsole and the outsole are only to be molded onto certain areas of the upper, e.g. in order to influence the rolling behavior. To this end it may be preferred to include in addition bridges or bars for the first lateral molding frame elements, such that the midsole is only directly soled onto desired parts of the upper (see Fig. 1f, bottom).

Fig. 5 illustrates preferred method steps for producing midsoles with air pockets. Fig. 5A illustrates the processing of a shoe last covered with an upper in a first clamping unit or first mold frame, while Fig. 5B illustrates the subsequent processing of a shoe last covered with an upper and soled with a first layer in a second clamping unit or second mold frame,
The depicted method comprises the steps of:
- clamping the last that is covered with the upper **3** by means of the first lateral molding frame elements **5**, such that the upper **2** seals the top of the first molding cavity **13**, wherein the first base stamp **11** exhibits structural elevations **16** such as ridges, pillars and/or pins,
- injecting the first molding material **7** for a midsole via a sprue **15** into the first molding cavity **13**,
- raising the first base stamp **11** such that the sprue **15** is closed and allowing for a reaction of the first molding material **7** to form the midsole **9**, wherein the structural elevations **16** such as ridges, pillars and/or pins impede a solidification of the molding material **7** in a space, which will form air openings **22**,
- lowering the first base stamp **12** and opening the first lateral molding frame elements **6** or vice versa to release the last covered with the upper and soled with the midsole **4** from the first mold frame, wherein the midsole **9** comprises air openings **22,** which reflect the shape of said structural elevations **16** and - if necessary - removing the flash **20,**
- transferring the last covered with the upper and soled with the midsole **4** to a second mold frame
- clamping the last that is covered with the upper and soled with a midsole **4** with the second lateral molding frame elements **6** such that the upper **2** soled with the midsole **9** seals the top of the second molding cavity **14,**
- injecting the second molding material **8** for an outer sole via a sprue **15** into the second molding cavity **14**,
- raising the second base stamp **12** such that the sprue **15** is closed, wherein the outer sole material **8** only partially enters said air openings **22** reflecting the shape of the structural elevations **16** such that air pockets **23** are produced at the respective sites and allowing for a reaction of the molding material **8** for an outer sole to form the outer sole **10**,
- lowering the second base stamp **12** and opening the second lateral molding frame elements **6** or vice versa to release the upper **2** soled with the midsole **9** comprising air pockets **23** from the second mold frame and removing the flash **20.**

The embodiment thus allows for the production of midsoles with air pockets according to a desired size and shape using a direct soling process to allow for instance for an improved dampening.

Fig. 6 illustrates preferred method steps for producing multilayered shoe soles using prefabricated components (e.g. prefabricated outer soles). Fig. 6A illustrates the processing of a shoe last covered with an upper in a first clamping unit or first mold frame, while Fig. 6B illustrates the subsequent processing of a shoe last covered with an upper and soled with a first midsole in a second clamping unit or second mold frame,

The depicted method comprises the steps of:
- clamping the last that is covered with the upper **3** by means of the first lateral molding frame elements **5**, such that the upper **2** seals the top of the first molding cavity **13**,
- injecting the first molding material **7** for a first midsole via a sprue **15** into the first molding cavity **13**,
- raising the first base stamp **11** such that the sprue **15** is closed and allowing for a reaction of the first molding material **7** to form the first midsole **9**,
- lowering the first base stamp **11** and opening the first lateral molding frame elements **5** or vice versa to release the last covered with the upper **2** and soled with the first midsole **9** from the first mold frame and removing the flash **20**,
- transferring the last covered with the upper and soled with the midsole **4** to a second mold frame,
- clamping the last that is covered with the upper and soled with a first midsole **4** with the second lateral molding frame elements **6** such that the upper **2** soled with the first midsole **9** seals the top of the second molding cavity **14**, wherein a prefabricated outer sole **24** is positioned on the second base stamp **12**,
- injecting molding material **8** for a second midsole via a sprue **15** into the second molding cavity **14**,
- raising the second base stamp **12** such that the sprue **15** is closed and allowing for a reaction of the molding material **8** for a second midsole to form a second midsole **10**, which bonds the positioned prefabricated outer sole **24** with the first midsole **9**,
- lowering the second base stamp **12** and opening the second lateral molding frame elements **6** or vice versa to release the upper **2** soled with a multilayered sole comprising a first midsole **9**, a second midsole **10** and a prefabricated outer sole **24** from the second mold frame and removing the flash **20.**

The embodiment allows to integrate prefabricated outer soles or stiffeners in multilayered shoes soles using a direct soling process as described herein.

### LIST OF REFERENCE SIGNS

- 2: upper
- 3: shoe last covered with an upper
- 4: shoe last covered with an upper to which a first layer is soled
- 5: first lateral molding frame elements
- 6: second lateral molding frame elements
- 7: first molding material, e.g. for a midsole (or a first midsole)
- 8: second molding material, e.g. for an outer sole (or a second midsole)
- 9: first layer of the shoe sole, e.g. midsole
- 10: second layer of the shoe sole, e.g. outer sole
- 11: first base stamp
- 12: second base stamp
- 13: first molding cavity
- 14: second molding cavity
- 15: sprue
- 16: structural elevations, preferably ridges, pillars or pins
- 17: channels
- 18: bridges or bars
- 19: structural depressions, preferably grooves or holes
- 20: flash
- 21: tearing edge
- 22: air openings
- 23: air pockets
- 24: prefabricated outer sole
- I: outer sole material attached to upper (e.g. running sole tip or toe cap)
- p: heel cap
- q: wedge of outer material within the midsole
- m: undercuts
- o, r: patches

## Claims

1. Method for direct soling a multilayered shoe sole onto a shoe upper (2), comprising
- providing an injection molding system comprising two mold frames,
- positioning a last covered with the upper (3) into a first mold frame to form a first molding cavity (13),
- injecting a first molding material (7) into the first molding cavity (13) to directly sole a first layer of the shoe sole (9) onto the upper (2),
- subsequently, positioning the same last, covered with the upper and soled with the first layer, (4) into the second mold frame to form a second molding cavity (14), and
- injecting a second molding material (8) into the second molding cavity (14) to directly sole a second layer of the shoe sole (10) onto said first layer (9).

2. Method according to the preceding claim,
**characterized in that**
a first mold frame comprises multiple first lateral molding frame elements (5) and a first base stamp (11), and a second mold frame comprises multiple second lateral molding frame elements (6) and a second base stamp (12).

3. Method according to the preceding claim,
**characterized in that**
the soling the first shoe sole layer (4) onto the upper (2) in a first mold frame comprises the steps of:
- clamping the last that is covered with the upper (3) by means of the first lateral molding frame elements (5), such that the upper (2) seals the top of the first molding cavity (13),
- injecting the first molding material (7) via a sprue (15), preferably formed by the multiple first lateral molding frame elements (5), into the first molding cavity (13),
- raising the first base stamp (11) such that the sprue (15) is closed and allowing for a reaction of the first molding material (7) to form the first layer of the shoe sole (9),
- lowering the first base stamp (12) and opening the first lateral molding frame elements (5) or vice versa to release the upper (2) soled with the first layer (9) from the first mold frame.

4. Method according to claim 2 or 3,
**characterized in that**
the soling the second shoe sole layer (10) onto the first layer (9) in the second mold frame comprises the steps of
- clamping the last that is covered with the upper and soled with a first layer (4) with the second lateral molding frame elements (6) such that the upper (2) soled with a first layer (9) seals the top of the second molding cavity (14),
- injecting the second molding material (8) via a sprue (15), preferably formed by the second lateral molding frame elements (7), into the second molding cavity (14),
- raising the second base stamp (12) such that the sprue (15) is closed and allowing for a reaction of the second molding material (8) to form the second layer of the shoe sole (10),
- lowering the second base stamp (12) and opening the second lateral molding frame elements (7) or vice versa to release the upper (2) soled with the first (9) and second layer (10) from the second mold frame.

5. Method according to any one of the preceding claims,
**characterized in that**
the first layer of the shoe sole (9) comprises or consists of a midsole and the second layer of the shoe sole (10) comprises or consists of an outer sole.

6. Method according to any one of the preceding claims
**characterized in that**
the first mold frame comprises multiple first lateral molding frame elements (5) and a first base stamp (11), wherein the first base stamp (11) comprises structuring elements, preferably structural elevations (16) and/or structural depressions (19), more preferably selected from the group consisting of ridges, pillars, pins, holes and/or grooves.

7. Method according to any one of the preceding claims,
**characterized in that**
the second mold frame comprises multiple second lateral molding frame elements (6) and a second base stamp (12), wherein the second base stamp (12) comprises a profile for a lateral and/or lower surface of a mid- and/or outer sole.

8. Method according to any one of the preceding claims,
**characterized in that**
the first layer of the shoe sole (9) comprises or consists of a first midsole and the second layer of the shoe sole (10) comprises or consists of a second midsole.

9. Method according to the preceding claim,
**characterized in that**
the second mold frame comprises multiple second lateral molding frame elements (6) and a second base stamp (12) onto which a prefabricated outer sole (24) is positioned.

10. Method according to any one of the preceding claims,
**characterized in that**
the first (7) and second (8) molding materials are provided prior to injection by mixing one or more base materials with one or more additives, wherein the one or more base materials are preferably a polyol and an isocyanate, such that a polyurethane is formed as a molding material and/or wherein the one or more additives are selected from a group comprising a color additive, a hardener, a softener, a crosslinker, gasing agent, a propellant, a cell opener or a stabilizer.

11. Use of the method according to any one of the preceding claims to produce a shoe with a multilayer shoe sole exhibiting features selected from the group consisting of a midsole with air pockets, undercuts of midsole material, sole parts made from an outer sole material directly connecting with the upper, for instance forming a toe cap or a running sole tip, sole parts made from an outer sole material disconnected from the bottom outer sole, for instance for providing a heel cap or wedges, or a bottom sole exhibiting disjunct patches of outer sole material.

12. Injection molding system for direct soling a multilayered shoe sole onto a shoe upper, comprising
- an injection unit;
- a mold frame for receiving a shoe last covered with an upper (3) to form a molding cavity,
- a control unit
wherein the injection unit is connectable to the mold frame, such that molding material is injectable into the molding cavity to form a layer of a shoe sole ,
**characterized in that**
the injection molding system comprises two mold frames, and the control unit is configured for:
- positioning a last covered with the upper (3) into a first mold frame to form a first molding cavity (13),
- injecting a first molding material (7) into a first molding cavity (13) to directly sole a first layer of the shoe sole (9) onto the upper (2),
- subsequently, positioning the last covered with the upper and soled with the first layer (4) into the second mold frame to form a second molding cavity (14),
- injecting a second molding material (8) into the second molding cavity (14) to directly sole a second layer of the shoe sole (10) onto said first layer (9).

13. Injection molding system according to the preceding claim,
**characterized in that**
the injection unit comprises a nozzle and the mold frames each comprise multiple lateral molding frame elements (5,6) forming a sprue (15), wherein the nozzle is connectable to the sprue (15) to inject molding material (7,8) into a molding cavity (13, 14) to form a layer of a shoe sole (9,10).

14. Injection molding system according to any one of the preceding claims 12 or 13,
**characterized in that**
the injection unit comprises a mixing head with at least one, preferably at least two valve inlets for one or more base materials and one or more additives, wherein the mixing head is configured to mix the one or more base materials with the one or more additives to form the molding material.

15. Injection molding system according to any one of the preceding claims 12 - 14,
**characterized in that**
the injection molding system comprises three or more pairs of mold frames mounted on a rotatable table, wherein the control unit is preferably configured for rotating each of the mold frames to connect to a stationary injection unit.
